# FASCICULE DE BREVET EUROPEEN

(11) **EP 2 687 718 B1**
(45) Date de publication et mention de la délivrance du brevet: **04.03.2015**
(21) Numéro de dépôt: 13177238.6
(22) Date de dépôt: 19.07.2013
(51) Int. Cl.: F03C 1/08

(54) **Circuit hydraulique de mise en cylindrée progressive d'un appareil hydraulique**
Hydraulikkreis mit progressiver Hubraumfüllung für hydraulisches Gerät
Hydraulic circuit for gradually adjusting the displacement of a hydraulic apparatus

(30) Priorité: 20.07.2012 FR 1257028
(43) Date de publication de la demande: 22.01.2014
(73) Titulaire: Poclain Hydraulics Industrie, 60410 Verberie (FR)
(72) Inventeur: D'Hersignerie, Cyrille, 60411 VERBERIE CEDEX (FR)
(74) Mandataire: Regimbeau

(56) Documents cités:
- DE-A1- 1 904 811
- DE-A1- 3 929 375
- DE-A1-102008 063 594

## Description

### DOMAINE TECHNIQUE GENERAL

La présente invention concerne les circuits hydrauliques comprenant des moyens de stockage d'énergie tels que des accumulateurs réalisant l'alimentation d'appareils hydrauliques.

### ETAT DE L'ART

Dans l'ensemble du présent texte, on désignera par appareil hydraulique un appareil pouvant fonctionner en tant que moteur ou que pompe hydraulique, et étant par exemple piloté au moyen de l'inclinaison d'un plateau de commande dudit appareil hydraulique. Un appareil hydraulique comprend de manière conventionnelle une pluralité de pistons disposés dans des logements, et effectuant des mouvements de va et vient au contact d'une came.

On connaît les appareils hydrauliques présentant une configuration de roue libre, c'est-à-dire une configuration dans laquelle l'appareil hydraulique fonctionne sans pression de fluide et plus particulièrement où les pistons ne sont pas en contact avec la came, une telle configuration étant par exemple avantageuse sur des engins ayant des conditions de travail mixtes. A cette configuration de roue libre s'oppose la configuration de travail, dans laquelle les pistons sont au contact de la came, et l'appareil hydraulique fonctionne avec une pression de fluide.

Une transmission hydraulique comprend ainsi typiquement un appareil hydraulique qui est en configuration de roue libre lorsque la transmission hydraulique n'est pas sollicitée, et passe en configuration de travail lorsqu'elle est sollicitée.

Ce passage de la configuration de roue libre à la configuration de travail est réalisé par une sortie des pistons, qui sont amenés au contact de la came, ou plus précisément leurs extrémités libres sont placées au contact de la came. Ce passage de la configuration de roue libre à la configuration de travail est communément appelé crabotage.

Les circuits hydrauliques exploitant des accumulateurs pour réaliser une fonction de récupération puis restitution d'énergie sont connus.

De tels circuits associent un ou plusieurs accumulateurs à un appareil hydraulique, et exploitent le rendement important de la combinaison d'accumulateurs et d'appareils hydrauliques pour proposer des systèmes économes en énergie.

Toutefois, l'utilisation d'accumulateurs hydrauliques affecte la durée de vie des appareils hydrauliques. En effet, un accumulateur hydraulique délivre immédiatement sa pression maximale, ce qui a pour effet de déplacer brutalement les pistons de l'appareil hydraulique, et entraine une usure importante des points de contact entre les pistons et la came ou le plateau de l'appareil hydraulique ainsi qu'un bruit important, ce qui est contraignant à la fois en termes d'usage et en termes de durée de vie du système.

Le document DE 10 2008 063594 est considéré comme le document décrivant l'état de la technique antérieure le plus proche.

### PRESENTATION DE L'INVENTION

La présente invention vise à proposer un système ne présentant pas de tels inconvénients.

A cet effet, l'invention propose un circuit hydraulique comprenant :
- un accumulateur hydraulique
- un appareil hydraulique
- une ligne primaire et une ligne secondaire reliant chacune ledit accumulateur à l'appareil hydraulique,
la ligne primaire comprenant une restriction et un distributeur primaire adapté pour relier sélectivement l'appareil hydraulique à l'accumulateur ou à un réservoir à pression ambiante,
la ligne secondaire comprenant un distributeur secondaire adapté pour alterner entre une première configuration dans laquelle il est obture la ligne secondaire, et une seconde configuration dans laquelle il est passant,
ledit distributeur secondaire étant piloté via la pression au sein de la ligne primaire en aval du distributeur primaire par rapport à l'accumulateur hydraulique, de sorte que le passage de la première à la seconde configuration du distributeur secondaire ne s'effectue que lorsque la pression dans la ligne primaire atteint une valeur seuil.

En variante, ledit distributeur secondaire est maintenu dans sa première configuration par un moyen de rappel auquel s'oppose une commande hydraulique pilotée par la pression dans la ligne primaire, ledit moyen de rappel définissant ainsi la valeur seuil de pression.

Selon une autre variante ledit circuit présente l'une ou l'autre des caractéristiques suivantes :
- le distributeur primaire et la restriction sont montés en série, ladite restriction étant de manière préférée en amont dudit distributeur primaire par rapport à l'accumulateur, ou
- le distributeur primaire comprend des conduits internes dimensionnés de manière à former la restriction.

L'appareil hydraulique est par exemple un moteur hydraulique à pistons radiaux.

L'invention propose également un procédé d'alimentation d'un appareil hydraulique au moyen d'un accumulateur hydraulique, comprenant les étapes suivantes :
- alimenter l'appareil hydraulique via une ligne primaire munie d'une restriction de manière à établir une première pression,
- lorsque la première pression atteint une valeur seuil, alimenter l'appareil hydraulique via une ligne secondaire de manière à ce que l'accumulateur soit directement relié à l'appareil hydraulique.

En variante, l'établissement de la première pression supérieure ou égale à la valeur seuil entraine le pilotage d'un distributeur dans la ligne secondaire d'une configuration dans laquelle il obture ladite ligne secondaire vers une configuration dans laquelle il est passant.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 présente un exemple de circuit hydraulique ouvert selon un aspect de l'invention,
- La figure 2 présente une variante du mode de réalisation présenté sur la figure 1,
- Les figures 3 et 4 présentent deux autres variantes du mode de réalisation présenté précédemment,
- La figure 5 présente une variante du circuit présenté sur la figure 1 en circuit fermé.

Sur l'ensemble des figures, les éléments communs sont repérés par des références numériques identiques.

### DESCRIPTION DETAILLEE

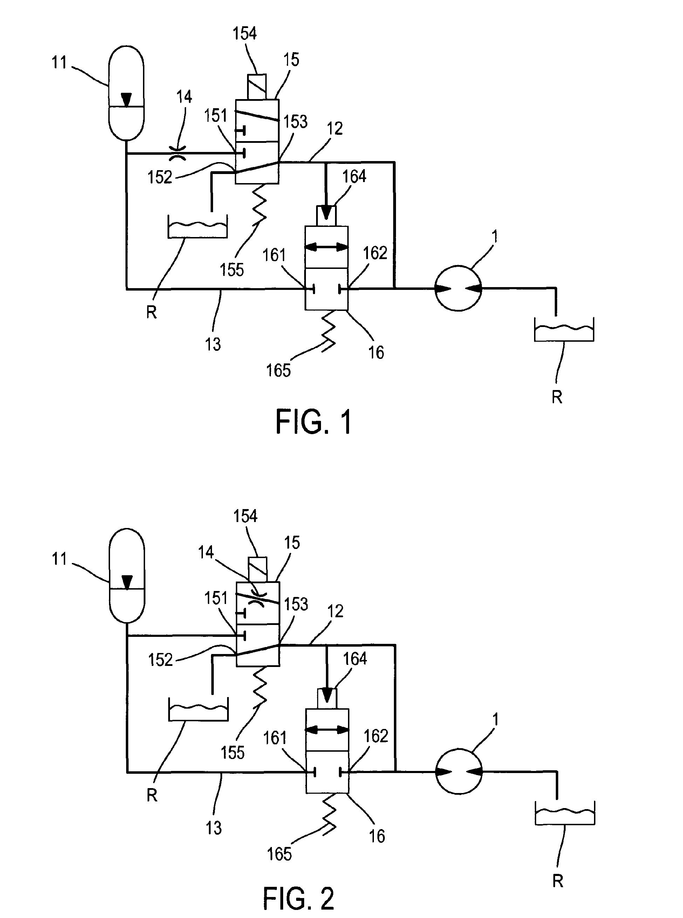

La figure 1 présente un exemple d'une partie de circuit hydraulique ouvert selon un aspect de l'invention.

Sur cet exemple, les systèmes de protection ou de chargement d'accumulateur ne sont pas représentés.

Le circuit tel que présenté comprend un appareil hydraulique 1, typiquement un appareil hydraulique à pistons radiaux, relié d'une part à un réservoir à pression ambiante R et d'autre part à un accumulateur 11 via une ligne primaire 12 et une ligne secondaire 13.

La ligne primaire 12 comprend une restriction 14 et un distributeur primaire 15 adapté pour relier sélectivement l'appareil hydraulique 1 à l'accumulateur 11 ou à un réservoir à pression ambiante R.

Le distributeur primaire 15 comprend ainsi trois orifices 151, 152 et 153, reliés respectivement à l'accumulateur 11, au réservoir à pression ambiante R et à l'appareil hydraulique 1. Le distributeur primaire 15 peut alterner entre deux configurations : une première configuration dans laquelle le premier orifice 151 est obturé tandis que le second orifice 152 et le troisième orifice 153 sont reliés, et une seconde configuration dans laquelle le premier orifice 151 et le troisième orifice 153 sont reliés tandis que le second orifice 152 est obturé.

Ainsi, dans sa première configuration, le distributeur 15 relie l'appareil hydraulique 1 au réservoir à pression ambiante R, tandis que dans sa seconde configuration, le distributeur 15 relie l'appareil hydraulique 1 à l'accumulateur 11.

Le distributeur primaire 15 est piloté au moyen d'une commande 154, typiquement une commande électrique, pneumatique ou hydraulique, à laquelle s'oppose un moyen de rappel élastique 155 qui maintient le distributeur primaire 15 par défaut dans sa première configuration.

La restriction 14 est par exemple un limiteur de débit, un limiteur de pression, un gicleur fixe ou réglable ou tout autre moyen adapté. Elle est avantageusement disposée en amont du distributeur primaire 15 par rapport à l'accumulateur 11, mais peut également être disposée en aval du distributeur primaire 15 par rapport à l'accumulateur 11.

La ligne secondaire 13 comprend un distributeur secondaire 16 comprenant deux orifices 161 et 162, adapté pour alterner entre une première configuration dans laquelle ses deux orifices 161 et 162 sont obturés et le distributeur secondaire 16 coupe la ligne secondaire, et une seconde configuration dans laquelle ses deux orifices 161 et 162 sont reliés, et le distributeur secondaire 16 est donc passant.

Le distributeur secondaire 16 est piloté au moyen d'une commande 164, typiquement une commande hydraulique, à laquelle s'oppose un moyen de rappel élastique 165 qui maintient le distributeur secondaire 16 par défaut dans sa première configuration. La commande 164 applique une pression prélevée dans la ligne primaire 12, en aval du distributeur 15 et de la restriction 14 par rapport à l'accumulateur 11, c'est-à-dire que la commande 164 applique au distributeur secondaire 16 la pression appliquée à l'appareil hydraulique 1 via la ligne primaire 12.

Le moyen de rappel élastique 165 du distributeur secondaire 16 détermine donc une valeur seuil de pression dans la ligne primaire 12 à partir de laquelle le distributeur secondaire 16 bascule de sa première configuration vers sa seconde configuration.

En fonctionnement, on considère une situation initiale dans laquelle l'appareil hydraulique 1 est en configuration de roue libre, c'est-à-dire une configuration dans laquelle l'appareil hydraulique 1 fonctionne sans pression de fluide et en plus particulièrement encore où les pistons ne sont pas en contact avec la came ou le plateau.

Lorsque l'on souhaite enclencher l'appareil hydraulique 1, c'est-à-dire le craboter pour passer en configuration de travail, on active dans un premier temps la commande 154 du distributeur primaire 15 de manière à établie une pression dans la ligne primaire 12.

L'accumulateur 11 se décharge ainsi dans la ligne primaire 12 via la restriction 14 et le distributeur primaire 15, de manière à appliquer le fluide à un débit limité à l'appareil hydraulique 1 du fait de la présence de la restriction 14.

Cette première application de pression à l'appareil hydraulique 1 entraine une sortie progressive des pistons qui viennent en appui contre la came ou le plateau associé.

Une fois que l'ensemble des pistons de l'appareil hydraulique 1 sont en appui contre la came de l'appareil hydraulique 1, si ce dernier est en charge, le fluide fourni par l'accumulateur 11 à l'appareil hydraulique 1 dans la ligne primaire 12 monte en pression dans la ligne primaire 12, La pression dans la ligne primaire 12 augmente ainsi jusqu'à atteindre la valeur de pression seuil de pression définie par le moyen de rappel élastique 165 à partir de laquelle le distributeur secondaire 16 bascule de sa première configuration vers sa seconde configuration.

Le passage du distributeur secondaire 16 de sa première vers sa seconde configuration relie l'accumulateur 11 à l'appareil hydraulique 1 via la ligne secondaire 13 ne comprenant pas de restriction, et permettant ainsi de ne pas limiter le débit issu de l'accumulateur 11 vers l'appareil hydraulique 1, et donc de lancer l'appareil hydraulique à sa pleine vitesse.

Une fois la charge de l'accumulateur 11 épuisée ou lorsque l'on coupe la commande 154 du distributeur primaire 15 qui retourne donc dans sa première configuration, la pression de commande appliquée au distributeur secondaire 16 via la commande 164 va diminuer et passer en dessous de la valeur seuil, ce qui va entrainer un retour du distributeur secondaire 16 dans sa première configuration ; l'appareil hydraulique sera donc relié de part et d'autre au réservoir à pression ambiante R.

Dans le cas d'un tel circuit ouvert, une pompe (non représentée) charge l'accumulateur 11 en prélevant du fluide dans le réservoir R.

La présente invention permet ainsi de réaliser un crabotage en deux temps, avec dans un premier temps une application d'un délit limité afin de réaliser la sortie des pistons, ce qui permet d'éviter des impacts, bruits et l'usure des pistons et de la came ou du plateau, tout en conservant une structure simple basée sur un unique accumulateur.

En outre, en l'absence de charge entrainée par l'appareil hydraulique 1, la pression ne s'élève pas dans la ligne primaire 12, et par conséquent la pression appliquée par la commande 164 ne dépasse pas la valeur seuil entrainant le basculement du distributeur secondaire 16 dans sa seconde configuration.

Pour cela, la restriction 14 peut être typiquement dimensionnée en fonction de la vitesse souhaitée pour la sortie progressive des pistons, qui est déterminée en fonction du volume d'huile à fournir pour sortir les pistons, et de la pression de l'accumulateur.

L'appareil hydraulique 11 est donc alimenté uniquement par un débit faible s'écoulant au travers de la restriction 14, ce qui limite sa vitesse de rotation et évite de le détériorer.

Pour cela, La restriction 14 est ainsi typiquement dimensionnée de manière à ce qu'en l'absence de basculement du distributeur secondaire 16 dans sa seconde configuration et donc tant que la ligne secondaire reste coupée, la vitesse de rotation de l'appareil hydraulique soit limitée. Par exemple, la vitesse maximale d'un moteur à pistons radiaux et à came multilobes peut être de l'ordre de 300 à 500 tours par minute. Cette valeur de restriction dépend de la cylindrée de l'appareil hydraulique, de la vitesse maximale souhaitée, et de la pression de l'accumulateur. Par exemple, pour un restriction dimensionnée pour un débit de 2 litres par minute, un moteur de 120cc atteindra une vitesse maximale de 16 tours par minute.

L'invention permet donc également de réaliser une protection des appareils tournant en cas de lancement à vide.

La figure 2 présente une variante du mode de réalisation présenté sur la figure 1, dans laquelle la restriction est intégrée au distributeur primaire ; le distributeur primaire comprend des conduits internes dimensionnés de manière à former la restriction 14

Une restriction additionnelle similaire à celle présentée sur la figure 1 peut être ajoutée.

Le fonctionnement est similaire à celui décrit en référence à la figure 1, et ne sera donc pas repris en détail ici.

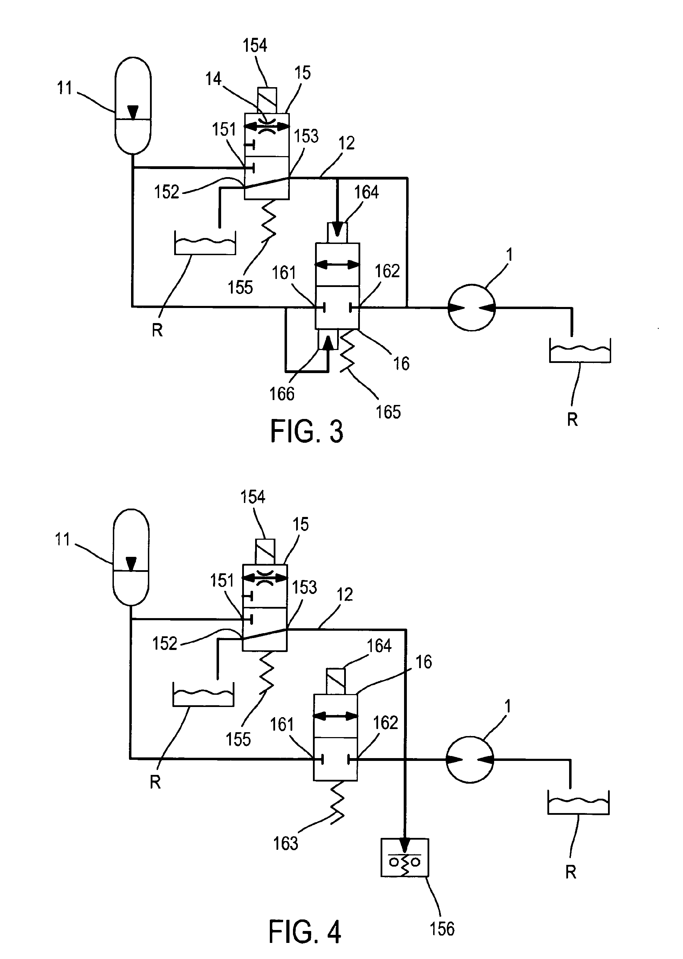

Les figures 3 et 4 présentent deux autres variantes du mode de réalisation présenté précédemment,

Dans la variante présentée sur la figure 3, le distributeur secondaire 16 est également piloté via une commande hydraulique secondaire 166 s'opposant à la commande 164 en plus de l'effort de rappel exercé par le moyen de rappel 165. Ce mode de réalisation particulier du pilotage du distributeur secondaire 16 par la pression dans la ligne primaire 12 déclenche le basculement du distributeur secondaire 16 lorsque la pression dans la ligne primaire 12, en aval du distributeur primaire 15 a atteint un pourcentage donné de la pression en amont du distributeur primaire 15, définissant ainsi la valeur seuil de pression définie précédemment.

Dans la variante présentée sur la figure 4, la commande 164 du distributeur secondaire 16 est une commande électrique, dont le déclenchement, et donc le basculement du distributeur secondaire 16 de sa première vers sa seconde configuration, est piloté par un capteur 156.

Ce capteur 156 est configuré de manière à piloter la commande 164 lorsque la pression à laquelle il est relié, en l'occurrence la pression dans la ligne primaire 12, en aval du distributeur primaire 15, atteint une valeur seuil.

Ces deux variantes présentées sur les figures 3 et 4 présentent donc deux réalisations alternatives du pilotage du distributeur secondaire 16 par la pression au sein de la ligne primaire 12.

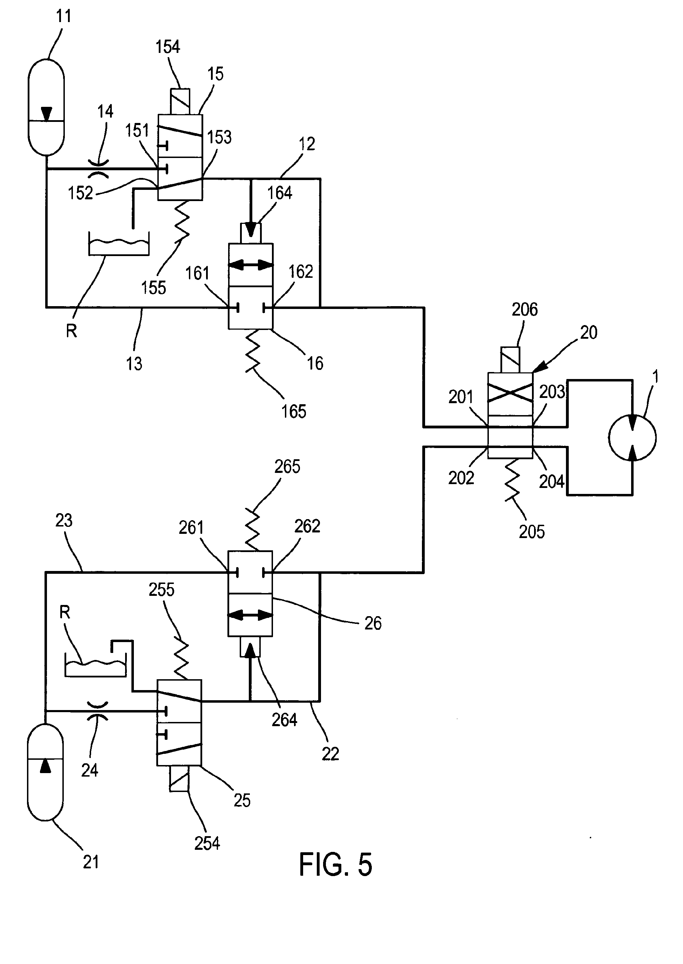

La figure 5 présente une variante en circuit fermé du circuit présenté sur la figure 1.

On comprend bien qu'une variante basée sur le circuit présenté sur la figure 2 est également possible.

Dans la variante représentée, l'appareil hydraulique 1 est relié de part et d'autre à un accumulateur, respectivement 11 et 21 via un circuit tel que présenté sur la figure 1.

On reprend ainsi les mêmes numérotations incrémentées d'une unité sur le premier chiffre.

Le circuit tel que présenté permet de réaliser une fonction de récupération d'énergie avec crabotage progressif des pistons de l'appareil hydraulique 1 tel que détaillé précédemment en référence à la figure 1.

Afin d'illustrer un exemple de fonctionnement, on considère que l'accumulateur 11 est chargé à une pression élevée, tandis que l'accumulateur 21 est chargé à une pression plus faible.

En fonctionnement, on active en premier lieu les commandes 154 et 254 des distributeurs primaires 15 et 25, ce qui entraine l'alimentation de l'appareil hydraulique par l'accumulateur 11 via la ligne primaire 12 afin de craboter l'appareil hydraulique en évitant les impacts et le bruit comme décrit précédemment, le fluide hydraulique étant ensuite acheminé vers l'accumulateur 21 via la ligne primaire 23, et chargeant ainsi l'accumulateur 21.

Une fois l'appareil hydraulique 1 craboté, la pression augmente dans la ligne primaire 12 jusqu'à atteindre la valeur de pression seuil de pression à partir de laquelle le distributeur secondaire 16 bascule de sa première configuration vers sa seconde configuration.

L'accumulateur 11 est ainsi relié directement à l'appareil hydraulique 1 via la ligne secondaire 13 ne comprenant pas de restriction, et permettant ainsi d'appliquer directement la pression de l'accumulateur 11 à l'appareil hydraulique 1.

La pression dans la ligne primaire 22 va alors augmenter en conséquence, ce qui va également provoquer le basculement du distributeur secondaire 26 lorsque la pression dans la ligne primaire 22 atteint une valeur seuil, et permet ainsi que le fluide refoulé par l'appareil hydraulique 1 charge l'accumulateur 21 sans être limité du fait de la restriction 24.

Le système tel qu'illustré sur la figure 5 est réversible ; une fois l'accumulateur 11 déchargé et l'accumulateur 21 chargé, on peut enclencher le système en sens inverse en déchargeant l'accumulateur 21 et en chargeant l'accumulateur 11.

Le système tel que présenté sur la figure 5 comprend en outre un distributeur 20 croisé-parallèle optionnel permettant d'obtenir une transmission travaillant toujours dans le même sens.

Ce distributeur 20 présente deux orifices 201 et 202 reliés respectivement aux circuits associés aux accumulateurs 11 et 21, ainsi que deux orifices 203 et 204 reliés à l'appareil hydraulique 1. Le distributeur 20 peut alterner entre deux configurations sous l'effet d'une commande 206 à laquelle s'oppose un moyen de rappel élastique 205 :
- Une première configuration dans laquelle le premier orifice 201 est relié au troisième orifice 203, tandis que le second orifice 202 est relié au quatrième orifice 204, et
- Une seconde configuration dans laquelle le premier orifice 201 est relié au quatrième orifice 204 tandis que le second orifice 202 est relié au troisième orifice 203.

Ce distributeur 20 permet donc d'inverser les liaisons entre les orifices de l'appareil hydraulique et les accumulateurs 11 et 21 via leurs circuits respectifs.

Ainsi, une fois l'accumulateur 11 déchargé, le distributeur 20 peut changer de configuration, de manière à ce que l'on continue d'entrainer l'appareil hydraulique 1 dans le même sens en déchargeant l'accumulateur 21. En l'absence d'un tel distributeur 20, un tel système pourrait par exemple être appliqué à une machine alternative.

Les accumulateurs 11 et 21 présentés sur les figures sont typiquement adaptés pour contenir un fluide sous pression comprise entre 250 et 400 bar.

La valeur seuil de pression de basculement des distributeurs secondaires 16 et 26 de leur première vers leur seconde configuration est typiquement comprise entre 10 et 20 bar, par exemple égale à 10 bar ou 20 bar.

L'invention telle que présentée présente ainsi plusieurs avantages, et permet notamment la protection de l'appareil hydraulique et d'éviter un bruit important lors de son crabotage, ainsi que la protection de l'appareil hydraulique en cas de lancement à vide de charge en limitant sa vitesse de rotation.

L'invention trouve une application particulière aux systèmes de récupération d'énergie utilisant des accumulateurs, et pour réaliser un démarreur hydrostatique permettant un lancement puissant et rapide d'un moteur de manière fiable et sans usure.

## Revendications

1. Circuit hydraulique comprenant :
- un accumulateur (11, 21) hydraulique
- un appareil hydraulique (1)
**caractérisé en ce qu'il** comprend en outre une ligne primaire (12, 22) et une ligne secondaire (13, 23) reliant chacune ledit accumulateur (11, 21) à l'appareil hydraulique (1),
la ligne primaire (12, 22) comprenant une restriction (14, 24) et un distributeur primaire (15, 25) adapté pour relier sélectivement l'appareil hydraulique (1) à l'accumulateur (11, 21) ou à un réservoir (R) à pression ambiante,
la ligne secondaire (13, 23) comprenant un distributeur secondaire (16, 26) adapté pour alterner entre une première configuration dans laquelle il obture la ligne secondaire (13, 23), et une seconde configuration dans laquelle il est passant,
ledit distributeur secondaire (16, 26) étant piloté via la pression au sein de la ligne primaire (12, 22) en aval du distributeur primaire (15, 25) par rapport à l'accumulateur (11, 21) hydraulique, de sorte que le passage de la première à la seconde configuration du distributeur secondaire (16, 26) ne s'effectue que lorsque la pression dans la ligne primaire (12, 22) atteint une valeur seuil.

2. Circuit selon la revendication 1, dans lequel ledit distributeur secondaire (16, 26) est maintenu dans sa première configuration par un moyen de rappel (165, 265) auquel s'oppose une commande hydraulique (164, 264) pilotée par la pression dans la ligne primaire (12, 22), ledit moyen de rappel (165, 265) définissant ainsi ladite valeur seuil de pression.

3. Circuit selon l'une des revendications 1 ou 2, dans lequel ledit distributeur primaire (15, 25) et la restriction (14, 24) sont montés en série, ladite restriction (14, 24) étant en amont dudit distributeur primaire (15, 25) par rapport au réservoir hydraulique (11, 21).

4. Circuit selon l'une des revendications 1 ou 2, dans lequel ledit distributeur primaire (15, 25) comprend des conduits internes dimensionnés de manière à former la restriction (14, 24).

5. Circuit selon l'une des revendications 1 à 4, dans lequel l'appareil hydraulique (1) est un moteur hydraulique à pistons radiaux.

6. Procédé d'alimentation d'un appareil hydraulique (1) au moyen d'un accumulateur hydraulique (11, 21), comprenant les étapes suivantes :
- alimenter l'appareil hydraulique (1) via une ligne primaire (12, 22) munie d'une restriction (14, 24) de manière à établir une première pression,
- lorsque la première pression atteint une valeur seuil, alimenter l'appareil hydraulique (1) via une ligne secondaire (13, 23) de manière à ce que l'accumulateur (11, 21) soit directement relié à l'appareil hydraulique (1).

7. Procédé selon la revendication 6 dans lequel l'établissement de la première pression à une valeur supérieure ou égale à la valeur seuil entraine le pilotage d'un distributeur (16, 26) dans la ligne secondaire (13, 23) d'une configuration dans laquelle il obture ladite ligne secondaire (13, 23) vers une configuration dans laquelle il est passant.

## Patentansprüche

1. Hydraulischer Kreislauf, umfassend:
- einen hydraulischen Speicher (11, 21)
- ein hydraulisches Gerät (1)
**dadurch gekennzeichnet, dass** er ferner eine Primärleitung (12, 22) und eine Sekundärleitung (13, 23) umfasst, die jede den Speicher (11, 21) mit dem hydraulischen Gerät (1) verbindet,
wobei die Primärleitung (12, 22) eine Drosselung (14, 24) und einen Primärverteiler (15, 25) umfasst, der angepasst ist, um das hydraulische Gerät (1) selektiv mit dem Speicher (11, 21) oder mit einem Behälter (R) unter Umgebungsdruck zu verbinden,
wobei die Sekundärleitung (13, 23) einen Sekundärverteiler (16, 26) umfasst, der angepasst ist, um zwischen einer ersten Konfiguration, in der er die Sekundärleitung (13, 23) absperrt, und einer zweiten Konfiguration, in der er durchleitend ist, zu alternieren,
wobei der Sekundärverteiler (16, 26) über den Druck im Inneren der Primärleitung (12, 22) relativ zu dem hydraulischen Speicher (11, 21) stromabwärts des Primärverteilers (15, 25) angesteuert wird, derart, dass der Übergang von der ersten zu der zweiten Konfiguration des Sekundärverteilers (16, 26) nur dann erfolgt, wenn der Druck in der Primärleitung (12, 22) einen Schwellenwert erreicht.

2. Kreislauf nach Anspruch 1, wobei der Sekundärverteiler (16, 26) in seiner ersten Konfiguration mit Hilfe eines Rückstellmittels (165, 265) gehalten wird, dem sich eine hydraulische Steuerung (164, 264) widersetzt, die durch den Druck in der Primärleitung (12, 22) angesteuert wird, wodurch das Rückstellmittel (165, 265) den Druckschwellenwert definiert.

3. Kreislauf nach einem der Ansprüche 1 oder 2, wobei der Primärverteiler (15, 25) und die Drosselung (14, 24) in Reihe geschaltet sind, wobei die Drosselung (14, 24) relativ zu dem hydraulischen Behälter (11, 21) stromaufwärts des Primärverteilers (15, 25) ist.

4. Kreislauf nach einem der Ansprüche 1 oder 2, wobei der Primärverteiler (15, 25) interne Leitungen umfasst, die derart dimensioniert sind, dass sie die Drosselung (14, 24) bilden.

5. Kreislauf nach einem der Ansprüche 1 bis 4, wobei das hydraulische Gerät (1) ein hydraulischer Radialkolben-Motor ist.

6. Verfahren zum Versorgen eines hydraulischen Geräts (1) mit Hilfe eines hydraulischen Speichers (11, 21), umfassend die folgenden Schritte:
- Versorgen des hydraulischen Geräts (1) über eine Primärleitung (12, 22), die mit einer Drosselung (14, 24) versehen ist, derart, dass sie einen ersten Druck aufbaut,
- wenn der erste Druck einen Schwellenwert erreicht, Versorgen des hydraulischen Geräts (1) über eine Sekundärleitung (13, 23), derart, dass der Speicher (11, 21) mit dem hydraulischen Gerät (1) direkt verbunden ist.

7. Verfahren nach Anspruch 6, wobei das Aufbauen des ersten Drucks auf einen Wert, der größer oder gleich dem Schwellenwert ist, die Ansteuerung eines Verteilers (16, 26) in der Sekundärleitung (13, 23) von einer Konfiguration, in der er die Sekundärleitung (13, 23) absperrt, zu einer Konfiguration, in der er durchleitend ist, bewirkt.

## Claims

1. A hydraulic circuit comprising:
a hydraulic accumulator (11, 21)
a hydraulic device (1)
**characterized in that** it further comprises a primary line (12, 22) and a secondary line (13, 23) each connecting said accumulator (11, 21) to the hydraulic device (1),
the primary line (12, 22) comprising a restriction (14, 24) and a primary distributor (15, 25) adapted to selectively connect the hydraulic device (1) to the accumulator (11, 21) or to a tank (R) at ambient pressure,
the secondary line (13, 23) comprising a secondary distributor (16, 26) adapted to alternate between a first configuration in which it blocks the secondary line (13, 23), and a second configuration in which it is passing,
said secondary distributor (16, 26) being controlled via the pressure within the primary line (12, 22) downstream of the primary distributor (15, 25) relative to the hydraulic accumulator (11, 21), such that switching from the first to the second configuration of the secondary distributor (16, 26) takes place only when the pressure in the primary line (12, 22) reaches a threshold value.

2. The circuit according to claim 1, wherein said secondary distributor (16, 26) is held in its first configuration by a return means (165, 265) to which a hydraulic control (164, 264) is opposed controlled by the pressure in the primary line (12, 22), said return means (165, 265) defining said pressure threshold value.

3. The circuit according to any one of claims 1 or 2, wherein said primary distributor (15, 25) and the restriction (14, 24) are mounted in series, said restriction (14, 24) being upstream of said primary distributor (15, 25) relative to the hydraulic tank (11, 21).

4. The circuit according to any one of claims 1 or 2, wherein said primary distributor (15, 25) comprises internal conduits dimensioned so as to form the restriction (14, 24).

5. The circuit according to any one of claims 1 to 4, wherein the hydraulic device (1) is a hydraulic engine with radial pistons.

6. A process for supplying a hydraulic device (1) by means of a hydraulic accumulator (11, 21), comprising the following steps:
supplying the hydraulic device (1) via a primary line (12, 22) fitted with a restriction (14, 24) so as to set a first pressure,
when the first pressure reaches a threshold value, supplying the hydraulic device (1) via a secondary line (13, 23) so that the accumulator (11, 21) is connected directly to the hydraulic device (1).

7. The process according to claim 6 wherein setting the first pressure at a value greater than or equal to the threshold value causes the control of a distributor (16, 26) in the secondary line (13, 23) from a configuration in which it blocks said secondary line (13, 23) to a configuration in which it is passing.
